# EUROPEAN PATENT SPECIFICATION

(11) **EP 1 698 141 B1**
(45) Date of publication and mention of the grant of the patent: **15.06.2011**
(21) Application number: 04794759.3
(22) Date of filing: 12.10.2004
(51) Int. Cl.: H04L 29/06

(54) **System and method for provisioning and authenticating via a network**
System und Verfahren zur Provisionierung und Authentifizierung über ein Netzwerk
Système et procédé pour la fourniture et l'authentification de réseau

(30) Priority: 01.12.2003 US 724995
(43) Date of publication of application: 06.09.2006
(60) Divisional application: 10185110.3
(73) Proprietor: Cisco Technology, Inc., San Jose, CA 95134 (US)
(72) Inventor: CAM WINGET, Nancy, Mountain View, California 94040 (US); ZHOU, Hao, Solon, Ohio 44139 (US); KRISCHER, Mark, Lane Cove, New South Wales 2066 (AU); SALOWEY, Joseph, Seattle, Washington 98103 (US); STIEGLITZ, Jeremy, Menlo Park, California 94025 (US); GILLAI, Saar, Mountain View, California 94040 (US); JAKKAHALLI, Padmanabha, Sunnyvale, California 94087 (US)
(74) Representative: Kazi, Ilya
(86) International application number: PCT/US2004/033489
(87) International publication number: WO 2005/057878

(56) References cited:
- PAUL FUNK;SIMON BLAKE-WILSON: "draft-ietf-pppext-eap-ttls-02.txt: EAP Tunneled TLS Authentication Protocol (EAP-TTLS)" INTERNET-DRAFT PPPEXT WORKING GROUP, 30 November 2002 (2002-11-30), XP015003044
- BELLOVIN S M ET AL: "Encrypted key exchange: password-based protocols secure against dictionary attacks" PROCEEDINGS OF THE COMPUTER SOCIETY SYMPOSIUM ON RESEARCH IN SECURITY AND PRIVACY. OAKLAND, MAY 4 - 6, 1992, LOS ALAMITOS, IEEE COMP. SOC. PRESS, US, vol. SYMP. 13, 4 May 1992 (1992-05-04), pages 72-84, XP010029001 ISBN: 0-8186-2825-1
- MENEZES A ET AL: "Kerberos Authentication Protocol" HANDBOOK OF APPLIED CRYPTOGRAPHY, XX, XX, 1 October 1996 (1996-10-01), pages 501-502, XP002276240

## Description

### BACKGROUND OF THE ART

The IEEE (Institute of Electrical and Electronic Engineers) 802.11 and 802.1x standards provide guidelines for allowing users to wirelessly connect to a network and access basic services provided therein. It has become more evident in recent years that security and controlled access are necessities in light of the large amount of sensitive information that is communicated over networks today.

With the advent of wireless telecommunications, there is an increasing need for the establishment, of security to provide data confidentiality and data authenticity. When two or more wireless parties (e.g. a server and a mobile client) wish to establish a level of security, they will typically "authenticate." In other words, the two parties prove to each other that they really are who they say they are. The proof of identity is typically through some form of "credential." Today, credentials are typically used to achieve authentication through one of two types of cryptographic disciplines: "symmetric cryptography" or "asymmetric cryptography."

Symmetric cryptography is based on the use of a "pre-shared secret," whereby both parties obtain the secret through some protected external means. For example, they may rely on a central source for the distribution of a "pre-shared secret." As well, one of the parties may disclose the "pre-shared secret" through some other protected means prior to its use. For example, the pre-shared secret might be a typical "user ID/password" assigned to a user by a network administrator. Nonetheless, the pre-shared secret must be obtained in a protected means to avoid any other party from learning the value or content of the pre-shared secret.

On the other hand, asymmetric cryptography is based on newer technologies, such as "Public Key Infrastructure" (PKI) which can enable a "zero knowledge" approach as proof of identification. However, while providing a higher level of security than possible with symmetric approaches, the PKI approach, while it may not require a shared secret between the two parties, must rely on a third party (known as a Certificate Authority) or must rely on some apriori knowledge to validate the authenticity of the public key. Hence, PKI techniques are far more costly, and may be prohibitively expensive to implement on some wireless networks. Additionally, the PKI approaches often require a third party to authenticate the PKI credentials.

Existing authentication protocols, such as EAP-TLS, EAP-TTLS, or PEAP act as authentication protocols designed to achieve mutual authentication directly or through the use of a protected tunnel to enable the use of weaker credentials by the client. To provide strong security, these protocols are typically deployed with the use of asymmetric cryptography which typically requires PKI.

In the case of EAP-TTLS and PEAP, the PKI is used to establish protected communications. This PKI requirement enforces both a compute intensive enforcement of asymmetric cryptography as well as the pre-provisioning of a means by which the client can validate a server certificate (e.g. for wireless clients, this is typically achieved by provisioning the client with the server's CA certificate).

Earlier implementations deploy a lightweight user authentication protocols, (e.g.such as EAP-MCHAP or LEAP) that employs the MSCHAPv1 exchange to protect the user password as it is transmitted between a peer and authentication server. However, limitations of the MSCHAPv1 protection as well as the ease in which wireless medium can be eavesdropped leaves earlier implementations vulnerable to passive offline dictionary attacks.

Today, emergent protocols such as EAP-TTLS and PEAP have evolved to protect authentication protocols, such as LEAP, that employ weak user credentials. Further, these protocols may be partitioned into three stages:

First, the establishment of a master secret and keying material; This conversation is the first step by which, typically, a server proves its authenticity to a peer. The peer in turn, provisions the server with a master secret.

Second, the establishment of a secure tunnel; This conversation is the step by which the common master secret is used with random challenges exchanged between peer and authentication server (AS) to generate fresh keying material used to establish a secure tunnel. The tunnel is used to protect the ensuing conversation by providing message confidentiality and integrity.

Third, the protected authentication conversation; This conversation, protected by the tunnel, enables the peer to use its weak credential to prove it is authenticity to the AS.

To construct the tunnel, earlier implementation protocols may also impose the use of another (stronger) set of credentials to assure the security of the tunnel. Typically, these credentials use public key infrastructures (PKI) to convey both identity and secret material to establish the authenticity of a user (e.g. peer) or authentication server (AS). The secret material, in general, employs asymmetric cryptography to validate the presented credential as being authentic and/or to generate keying material used to protect the tunnel. Further, to provide peer identity protection, these earlier protocols only require server side authentication for the tunnel establishment and employ peer-only establishment of the master secret from which the tunnel protection is derived.

While the aforementioned protocols are evolving to better address known vulnerabilities of earlier implementations, they too inherently posses a number of burdens. For example, the computational burdens (e.g. master key establishment) imposed by the asymmetric cryptographic operations at every instance a peer desires to gain network access is a limiting factor for very small devices.

Additionally, in typical deployments today, a certificate implies the verification of the certificate signature through a certificate authority. For wireless media, it is prohibitive for peers to contact a certificate authority as the peer has not yet gained network access. Thus, in typical deployments today, peers must be provisioned with the certificate authority's certificate. In turn, the certificate authority's certificate is then used by the peer to validate the server's certificate. Beyond the implementation overhead for the certificate management, this use also imposes another asymmetric cryptographic operation at every authentication that further consumes precious resources on small devices.

Still further, in early deployments of EAP-TTLS and PEAP, the lack of cryptographic binding between the tunnel establishment and the conversation inside the tunnel allows a man-in-the-middle (MiM) attack. The MiM attack enables an adversary to successfully act as the AS to the peer and vice versa, thus enabling the adversary to control the information flow between the peer and authenticator.

Finally, to enable identity protection, earlier protocols such as EAP-TTLS and PEAP allow only server-authenticated tunnels which can be used by adversaries to hijack sessions from peers who use EAP methods that cannot be cryptographically bound to the tunnel.

What is needed is a protocol that provides more secure provisioning and authentication protocols between entities via a network. The need to provide user friendly and easily deployable network access solutions has heightened the need to enable strong mutual authentication protocols that inherently use weak user credentials. Further, what is needed is a protocol that decouples the means by which a pre-shared key is established and used to secure communications from the actual process of employing authentication mechanisms to gain access to a network.

Paul Funk, Simon Blake-Wilson, "draft-ietf-pppext-eap-ttls-02.txt: EAP Tunneled TLS Authentication Protocol (EAP-TTLS)", Internet Draft PPPEXT Working Group, 30 November 2002, XP015003044 discusses EAP-TTLS, an EAP protocol that extends EAP-TLS. EAP-TTLS uses a secure connection established by an asymmetric TLS handshake process to exchange additional information between the client and server.

Bellovin SM et al, "Encrypted key exchange: password-based protocols secure against dictionary attacks", 4 May 1992, Los Alamitos, XP010029001, discloses a mechanism for securing password-based authentication using asymmetric and symmetric cryptography.

Menezes A et al, "Kerberos Authentication Protocol", Handbook of Applied Cryptography, 1 October 1996, pgs 501-502, XP002276240 discloses the Kerberos distributed authentication protocol.

### SUMMARY OF THE DISCLOSED EMBODIMENTS

Aspects of the invention are set out in the independent claims and preferred features of the aspects are set out in the dependent claims.

In another embodiment, authenticated communication may be performed using Microsoft MS-CHAP v2.

It will be appreciated that the communication implementation may be a wired or wireless implementation. Further, the secure credential used for establishing an authenticated tunnel may be a protected access credential (PAC). It will be appreciated that the PAC may include a protected access credential or entropy key of any desired length (e.g. 32-octets). Additionally, the PAC may include a protected access credential opaque element or a protected access credential information element.

In accordance with the present system and method, the provisioning occur through in-band mechanisms.

In another embodiment, a tunnel key may be established during the tunnel establishment phase. The establishment of the tunnel key may include the step of establishing a session_key_seed to be used in authenticated communication.

An asymmetric encryption algorithm is used to derive the tunnel key subsequently used in the step of establishing a secure tunnel when provisioning a PAC. Further, an asymmetric encryption algorithm such as Diffie-Hellman key exchange may be used to derive the shared secret used to protect the authentication mechanism prior to the in-band distribution of a PAC.

### BRIEF DESCRIPTION OF THE DRAWINGS

It will be appreciated that the illustrated boundaries of elements (e.g. boxes, groups of boxes, or other shapes) in the figures represent one example of the boundaries. One of ordinary skill in the art will appreciate that one element may be designed as multiple elements or that multiple elements may be designed as one element. An element shown as an internal component of another element may be implemented as an external component and vice versa.

For a more complete understanding of the present system and the advantages thereof, reference is now made to the following description taken in conjunction with the accompanying drawings in which:
Figure 1 illustrates a network block diagram that illustrates the multiple phases of communication between network components, in accordance with a disclosed embodiment;
Figure 2 illustrates a network architectural diagram that illustrates representative network components in accordance with a disclosed embodiment;
Figure 3 illustrates a protocol (e.g. EAP-Fast) layering model in accordance with a disclosed embodiment of the present system;
Figure 4 illustrates a communication exchange in accordance with the authentication tunnel establishment phase of a disclosed embodiment of the present system;
Figure 5 illustrates a communication exchange in accordance with the authentication protected authentication phase of a disclosed embodiment of the present system; and
Figure 6 illustrates a flow chart of the information exchange between the various entities for provisioning a client, establishing a tunnel, and authenticating a trusted relationship in accordance with a disclosed embodiment.

### DETAILED DESCRIPTION OF THE DISCLOSED EMBODIMENTS

The following includes definitions of selected terms used throughout the disclosure. The definitions include examples of various embodiments and/or forms of components that fall within the scope of a term and that may be used for implementation. Of course, the examples are not intended to be limiting and other embodiments may be implemented. Both singular and plural forms of all terms fall within each meaning:

"Authenticator", as used herein, refers to the end of the link initiating EAP authentication.

"Backend authentication server", as used herein, refers to an entity that provides an authentication service to a peer. When used, this server typically executes EAP methods to be executed between the server and peer; the authenticator acts as a pass through filter until such time the server authenticates and authorizes the peer. At the time of successful authentication, the authorization policy is distributed from the server to the authenticator.

"Computer-readable medium", as used herein, refers to any medium that participates in directly or indirectly providing signals, instructions and/or data to one or more processors for execution. Such a medium may take many forms, including but not limited to, non-volatile media, volatile media, and transmission media. Non-volatile media may include, for example, optical or magnetic disks. Volatile media may include dynamic memory. Common forms of computer-readable media include, for example, a floppy disk, a flexible disk, hard disk, magnetic tape, or any other magnetic medium, a CD-ROM, any other optical medium, punch cards, paper-tape, any other physical medium with patterns of holes, a RAM, a PROM, an EPROM, a FLASH-EPROM, any other memory chip or cartridge, a carrier wave/pulse, or any other medium from which a computer, a processor or other electronic device can read. Signals used to propagate instructions or other software over a network, such as the Internet, are also considered a "computer-readable medium."

"Diffie-Hellman", as used herein, refers to a well known asymmetric cryptographic technique whereby a secure cipher key is generated by wireless parties from transformations of exchanged transformed signals. This cryptographic technique, also known as the "Diffie-Hellman Key Agreement" is disclosed in U.S. Pat. No. 4,200,770, the disclosure of which is hereby incorporated by reference.

"EAP server", as used herein, refers to the entity that terminates the EAP authentication method with the peer. In the case where no backend authentication server is used, the EAP server may be part of the authenticator. In the case where the authenticator operates in pass-through mode, the EAP server may be located on the backend authentication server.

"Internet", as used herein, includes a wide area data communications network, typically accessible by any user having appropriate software.

"Logic", as used herein, includes but is not limited to hardware, firmware, software and/or combinations of each to perform a function(s) or an action(s), and/or to cause a function or action from another component. For example, based on a desired application or need, logic may include a software controlled microprocessor, discrete logic such as an application specific integrated circuit (ASIC), a programmable/programmed logic device, memory device containing instructions, or the like. Logic may also be fully embodied as software.

"Man in the Middle (MiM)", as used herein, refers to an adversary that can successfully inject itself between a peer and authentication server. The MiM succeeds by impersonating itself as a valid peer, authenticator or authentication server.

"PAC-Opaque", as used herein, refers to a piece of information that can be used by a server to recreate and validate the PAC-Key it issued to a client. The information is obscured from the client or any adversary such that the client or adversary can not discern the information held in the PAC-Opaque.

"Octet", as used herein, refers to a sequence of eight bits. An octet is thus an eight-bit byte. Since a byte is not eight bits in all computer systems, octet provides a non-ambiguous term.

"Peer", as used herein, refers to the end of the link that responds to the authenticator. In the IEEE 802.1X specification, this end is also known as the supplicant or client. Accordingly, this IEEE 802.1X definition is incorporated herein.

"Protected Access Credential (PAC) ", as used herein, refers to credentials distributed to users for future optimized network authentication, which consists of a secret part and an opaque part. The secret part is secret key material that may be used in future transactions. The opaque part is presented when the client wishes to obtain access to network resources. The PAC aids the server in validating that the client possesses the secret part.

"Protocol", as used herein, refers to a set of rules that govern all communications between nodes and devices. Protocol may control format, timing, error correction, and running order.

"Software", as used herein, includes but is not limited to one or more computer readable and/or executable instructions that cause a computer or other electronic device to perform functions, actions, and/or behave in a desired manner. The instructions may be embodied in various forms such as objects, routines, algorithms, modules or programs including separate applications or code from dynamically linked libraries. Software may also be implemented in various forms such as a stand-alone program, a function call, a servlet, an applet, instructions stored in a memory, part of an operating system or other type of executable instructions. It will be appreciated by one of ordinary skill in the art that the form of software may be dependent on, for example, requirements of a desired application, the environment it runs on, and/or the desires of a designer/programmer or the like.

"Successful authentication", as used herein, refers to an exchange of EAP messages as a result of which the authenticator decides to allow access by the peer, and the peer decides to use this access. The authenticator's decision typically involves both authentication and authorization aspects; the peer may successfully authenticate to the authenticator but access may be denied by the authenticator due to policy reasons.

Following are Acronyms used throughout the present disclosure:
A-ID - Authority Identifier
AS - Authentication Server
EAP - Extensible Authentication Protocol
EAP-FAST - Flexible (EAP) Authentication via Secure Tunnel Protocol
LEAP - Cisco Lightweight EAP
MAC - Message Authentication Code
MiM - Man in the middle attack
NAS - Network Access Server (typically an access point)
PAC - Protected Access Credential
PEAP - Protected EAP
PKI - Public Key Infrastructure
PRF - Pseudo Random Function
SKS - Session Key Seed
TLV - Type-Length-Value

The following includes examples of various embodiments and/or forms of components that fall within the scope of the present system that may be used for implementation. Of course, the examples are not intended to be limiting and other embodiments may be implemented without departing from the scope of the invention.

The IEEE (Institute of Electrical and Electronic Engineers 802.11 standard provides guidelines for allowing users to wirelessly connect to a network and access basic services provided therein.

In addition to definitions provided herein, the terms in this specification should be interpreted as defined, or as customarily used, in the Institute of Electrical and Electronics Engineers (IEEE) 802.11 and 802.1x specifications.

Although the embodiments of present system and method described herein are directed toward an IEEE 802.11 wireless network, it will be appreciated by one skilled in the art that the present concepts and innovations described herein may be applied to alternate wired and wireless network protocols without departing from the scope of the present innovation.

Briefly describing one embodiment of the present system and method, it provides for a protocol suitably designed to use symmetric cryptography to allay PKI requirements present when a peer desires to gain access to the network. In other words, the present system and method alleviate the PKI requirements by decoupling the establishment of a master secret from the subsequent conversations used facilitate network access to a peer.

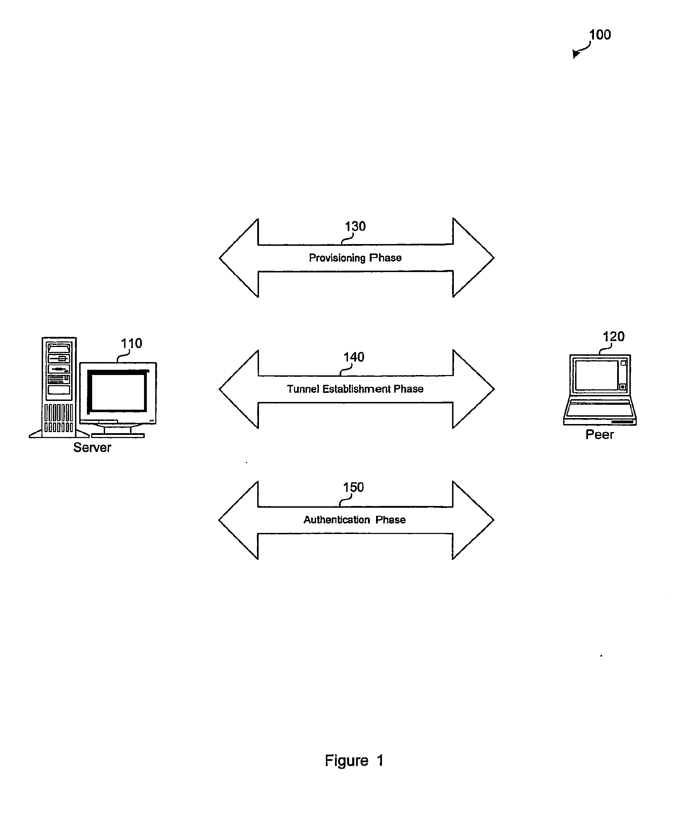

Referring to **Figure 1** and briefly describing one embodiment of the present system **100,** it provides for a protocol suitably configured to protect the transmission of information in a network (e.g. wired or wireless) thereby potentially preventing session attacks and/or disruption. Specifically, one embodiment of the present innovation is directed toward a system and method configured to decouple the means by which a key may be established (e.g. master secret) between a server **110** and a peer **120** to secure communications from the actual process of employing the authentication mechanism to gain access to the network.

Generally, as illustrated in **Figure 1** and in accordance with an embodiment, the decoupling of the protocol of system **100** may be partitioned into three phases: (i) the "Provisioning Phase" **130** which may be used to establish a protected access credential (e.g.PAC); (ii) the "Tunnel Establishment Phase" **140** which may be used to achieve an authenticated key agreement for securing communications; and (iii) the "Authentication Phase" **150** whereby a secure tunnel may be suitably employed to gain network access.

As disclosed herein, an embodiment of the present system and method discloses a provisioning and authenticating method that allows for the use of an encryption technique while minimizing the risk of a Man-in-the-Middle (MiM) attack. In one embodiment, the provisioning technique may be a Diffie-Hellman key exchange technique used to mutually derive a shared secret to protect the tunnel that is used to authenticate and ultimately provision a PAC. Of course, an artisan would appreciate that any scheme other than the Diffie-Hellman approach may be used without departing from the spirit and scope of the present system and method. Similarly, with a PAC provisioned, a PAC-Key is then used to establish a mutually authenticated secure tunnel using symmetric encryption that is used to protect the weaker authentication credential to effect a peer's authentication and thus gain network access.

### OVERVIEW

In accordance with one embodiment, the present system and method protocol, (also hereinafter referred to as "EAP-FAST") is suitably configured to achieve mutual authentication by using a shared secret to establish a tunnel used to protect weaker authentication methods (e.g. user names and passwords). The shared secret, referred to in this embodiment as the Protected Access Credential key (hereinafter the PAC-Key) may be advantageously used to mutually authenticate the server **110** and the peer **120** when securing a tunnel.

The present protocol may be an extensible framework that enables mutual authentication that addresses the criteria of earlier implementations. For example, the present system **100** is suitable configured to partition the conversation into three phases as illustrated in **Figure 1****.**

In the Provisioning Phase **130,** the peer **120** may be provisioned with a unique, strong secret referred to as the PAC which may be shared between the peer **120** and the server **110.** In the embodiment, the conversation used for the provisioning phase **130** may be protected by a Diffie-Hellman key agreement to establish a protected tunnel. Of course, it will be appreciated that protocols other than Diffie-Hellman may be used in implementations of the present system without departing from the scope of the present innovation.

Further, the peer **120** may successfully authenticate itself before the server **110** provisions the peer **120** with the PAC. It will be appreciated that the Provisioning Phase **130** may be initiated solely by the peer **120** in order to alleviate the computational overhead and cost in having to establish a master secret every instance a peer **120** desires to gain access to the network. Additionally, as this in-band provisioning mechanism requires asymmetric cryptography; it will be appreciated that there may be devices for which the computational cost of the Diffie-Hellman key agreement is prohibitive. Thus, by decoupling this phase as a provisioning only conversation which is separate to the network access conversation, such devices may opt to bypass in-band provisioning by enabling out-of-band mechanisms to provision the PAC.

In other words, by decoupling this Provisioning Phase **130** as a provisioning only conversation, the present system and method provides the flexibility and extensibility in allowing both server **110** and peer **120** to utilize other tools or protocols more appropriate for their deployment scenario. For instance, while this present protocol explicitly defines one particular in-band mechanism to achieve a shared secret, it will be appreciated that other means, in-band or out-band may be employed for achieving similar results.

Continuing with the embodiment, in the Tunnel Establishment phase **130,** the peer **120** and server **110** authenticate each other by use of the PAC established in the Provisioning Phase **130** whereby a fresh tunnel key is established. The tunnel key generated in the Tunnel Establishment Phase **130** is then used to protect the remaining portions of the conversation, suitably providing both message confidentiality and authenticity.

Next, in accordance with the Authentication Phase **150**, within the tunnel session, a complete authentication or authorization policy may be established and executed along with proper termination and generation of the Session Keys (SKs). The Session Keys may be distributed to the network access server (e.g. access point).

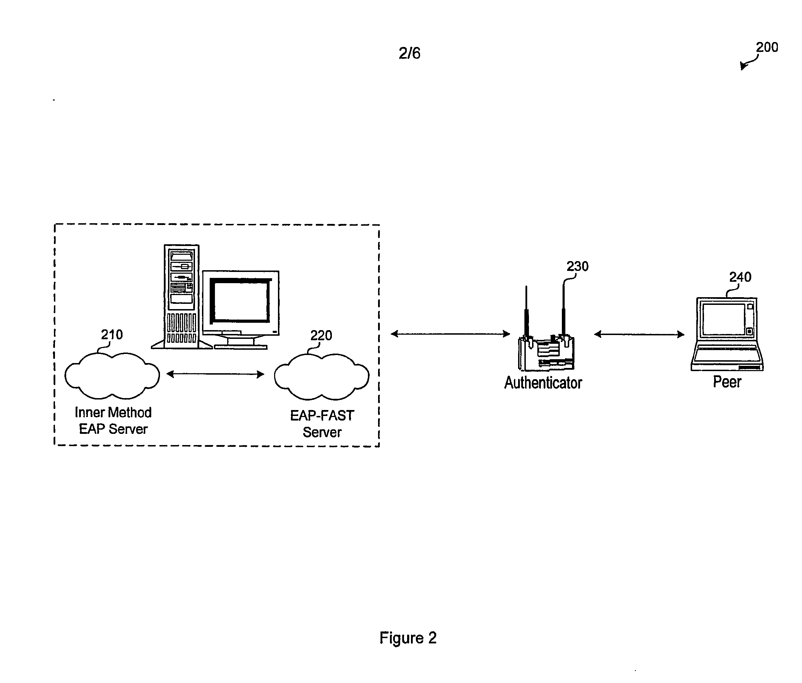

Illustrated in **Figure 2** is a simplified system component diagram of one embodiment of an architectural model of an embodiment of system **200.** The system components shown in **Figure 2** generally represent the system **200** and may have any desired configuration included within any system architecture.

Referring now to **Figure 2****,** an embodiment of the present system **200** is shown. In accordance with the embodiment, the present system generally includes a logical Inner EAP Method Server **210,** an EAP-FAST Server **220,** an Authenticator **230** and a Peer **240.**

In accordance with the wireless network of the embodiment, it will be appreciated that the peer **240** may be any component capable of obtaining access to a wireless network such as a laptop/notebook portable computer having Cardbus network adapter suitable for wireless communication with a wired network, an electronic tablet having a suitable wireless network adapter, a handheld device containing a suitable wireless network adapter for communicating to a wired network or the like. As well, it will be appreciated that the authenticator **230** may be a server, switch, access point or the like.

It will be appreciated that entities illustrated in **Figure 2** are logical entities and may or may not correspond to separate network components. For example, the Inner Method EAP server **210** and the EAP-FAST server **220** may suitably be configured into a single entity as illustrated in **Figure 2****.** As well, for example, the EAP-FAST server **220** and the authentication server **230** may be suitably configured into a single entity (not shown). Further, it will be appreciated that the functions of the Inner Method EAP server **210,** the EAP-FAST server **220** and/or the authenticator **230** may suitably be combined into a single component (not shown). An artisan will appreciate that **Figure 2** illustrates the division of labor among entities in a general manner and illustrates one embodiment of a distributed system construction.

### PROTOCOL LAYERING MODEL

In accordance with EAP-FAST, packets may be encapsulated within existing known protocols. For illustration purposes, this discussion will be directed toward the use of EAP in connection with the present protocol. Of course, it will be appreciated that other protocols known in the art may be used in accordance with the present system and method without departing from the spirit and scope described herein.

Continuing with the embodiment, the packets may be encapsulated within EAP whereby EAP in turn utilizes a carrier protocol to transport the packets. Of course, the packets themselves may be suitably configured to encapsulate TLS, which may then be used to encapsulate user authentication information.

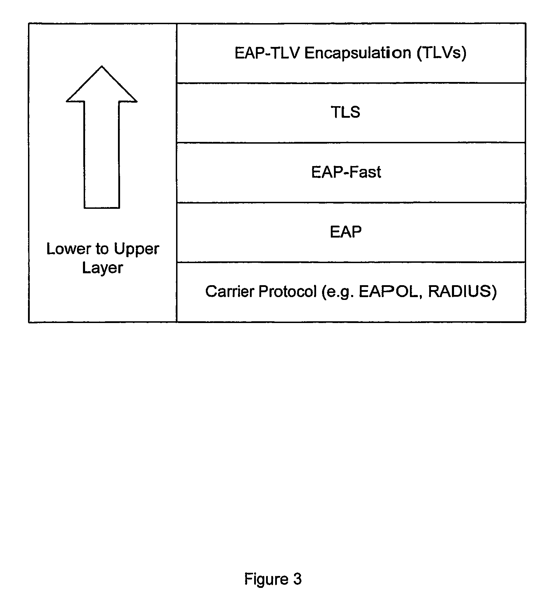

Thus, in accordance with an embodiment, the messaging can be described using a layered model, whereby each layer may be suitably configured to encapsulate the layer beneath it. Reference to **Figure 3** illustrates the relationship between protocols in accordance with the embodiment.

An artisan will appreciate that the EAP-TLV method illustrated in **Figure 3** may be a payload with standard Type-Length-Value (TLV) objects. In accordance with the embodiment, the TLV objects may be used to carry arbitrary parameters between an peer **120** and an server **110** of **Figure 1****.**

Continuing with the embodiment, all conversations in the Authentication Phase **150** of **Figure 1** may be encapsulated utilizing an EAP-TLV method as illustrated in **Figure 3**. It will be appreciated that the EAP header portion of the EAP-TLV payload may be omitted for optimization, leaving only a list of TLVs as the payload.

An artisan will appreciate that methods for encapsulating EAP within carrier protocols is known in the art. For example, EAPOL may be used to transport EAP between a client and an access point. Likewise, RADIUS or Diameter may be used to transport EAP between an authenticator and the protocol server.

Following is a discussion of the three phases decoupled in accordance with the present system and method protocol (e.g. EAP-FAST).

### PROVISIONING PHASE 130

In operation and in accordance with one embodiment, as previously discussed, a shared secret may be established in-band by employing the Provisioning Phase **130** of **Figure 1****.** This shared secret which may be mutually and uniquely shared between the peer **120** and authentication server **110** may be used to secure a tunnel in accordance with the present system and method.

In one embodiment of the present system, the protocol may be advantageously configured to use the shared secret or PAC to facilitate the use of a single shared secret by a peer **120** and to minimize the per user state management on the authentication server **110.**

Continuing with the embodiment, the PAC may be a security credential provided by the authentication server **110** segmented into a PAC-Key, PAC-Opaque and PAC-Info elements. It will be understood that the PAC elements may have any desired length. For example, the PAC-Key element may be a 32-Octet key used by the peer **120** to establish the tunnel in accordance with the Tunnel Establishment Phase **140.**

As well the PAC-Opaque element may be a variable length field that may be sent to the authentication server **120** during the Tunnel Establishment Phase **140.** It will be appreciated that the PAC-Opaque element is an obscure element that may be interpreted solely by the authentication server **120** in order to recover the PAC-Key element as well as determine the PAC's authenticity and expiry time.

In the embodiment, the third element, the PAC-Info element, may be a variable length field used to provide at minimum, the authority identity or PAC issuer. It will be appreciated that other information (e.g. PAC-Key lifetime) may be conveyed by the authentication server **120** to the peer **110** during the PAC Provisioning (or refreshment) Phase **130**.

It will be appreciated that the PAC may be provisioned through out-of-band or in-band mechanisms using any desired authentication protocol (e.g. Diffie-Hellman) or through some other external application level tools. As previously discussed, all three components comprising the PAC may be provided (e.g. PAC-Key, PAC-Opaque and PAC-Info) in the Provisioning Phase **130.**

Next, is a discussion of the secured Tunnel Establishment Phase **140** in accordance with an embodiment of EAP-FAST.

### TUNNEL ESTABLISHMENT PHASE 140

In accordance with the embodiment, this Tunnel Establishment Phase **140** is similar to establishing a new TLS session utilizing a modified EAP type and extension to TLS handshake protocol in accordance with EAP-FAST.

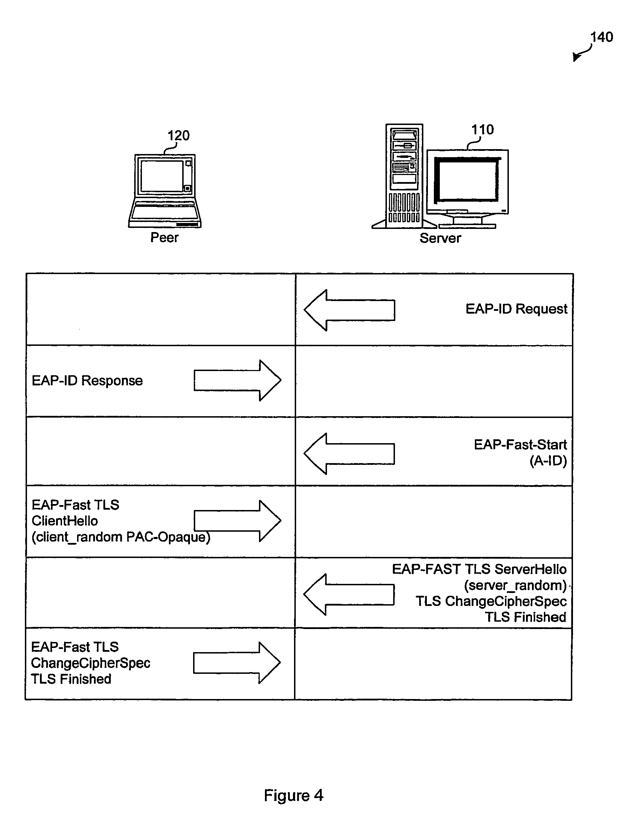

Reference to **Figure 4** illustrates an embodiment of a conversation between an authentication server **110** and a peer **120** in accordance with the Tunnel Establishment Phase **140** of the present system and method.

As illustrated in **Figure 4** and in accordance with the embodiment, the initial conversation of the Tunnel Establishment Phase **140** begins with the authentication server **110** and the peer **120** negotiating EAP.

Initially, the server **110** will typically send an EAP-Request/Identity packet to the peer **120,** and the peer **120** will respond with an EAP-Response/Identity packet (e.g. username) to the server **110.** It will be appreciated that the peer **120** may use an anonymous username if it desires to protect its identity.

While the EAP conversation normally occurs between the server **110** and the peer **120,** it will be appreciated that the authentication server **110** may act as a pass-through device whereby the EAP packets received from the peer **120** being encapsulated for transmission to a backend authentication server (not shown). For illustration purposes, the discussion that follows, will use the term "EAP server" (e.g. **110**) to denote the ultimate endpoint conversing with the peer **120**.

Once the identity of the peer **120** is received and a determination is made that authentication is to occur in accordance with the present innovation protocol (e.g. EAP-FAST), the EAP server **110** responds with a Present Protocol/Start packet.

In accordance with the embodiment, the Start packet may be an EAP-Request packet with EAP-Type=EAP-FAST and the Start (S) bit set. Of course, the Start packet may also include an authority identity (A-ID) TLV to inform the peer **120** the identity of the server **110.** At this point, the conversation may commence by the peer **120** sending a response in accordance with EAP-FAST.

As illustrated in **Figure 4****,** the data field of the EAP-Response packet may contain an EAP-FAST encapsulated TLS client-hello handshake message. Of course the client_hello message may contain the peer **120** challenge (also called the client_random) and PAC-Opaque in the TLS ClientHello extension.

It will be appreciated that as there may be multiple servers (not shown) that a peer **120** may encounter, a peer **120** may be provisioned with a server unique PAC in accordance with the present protocol. Of course, a peer **120** may be configured to cache the different PACs and to make a determination based on the received A-ID which corresponding PAC to employ.

Next, the server **110** will then respond with an EAP-Request packet with EAP-Type=EAP-FAST. As illustrated in **Figure 4****,** the data field of this packet may be configured to encapsulate three TLS records, ServerHello, ChangeCipherSpec and Finished messages. It will be appreciated that the ServerHello record may contain a server_random and ChangeCipherSpec. As well, the TLS Finished message sent after the ChangeCipherSpec message may contain the first protected message with presently-negotiated algorithm, keys, and secrets.

Of course, the server may be configured to generate the Tunnel key prior to composing the EAP-FAST TLS Server Hello message. As well, the peer **120** in turn, may consume the server_random in order to generate the Tunnel Key.

In accordance with the embodiment the Tunnel Key may be derived in a manner similar to TLS key calculation used in earlier implementations. However, an additional element is generated in accordance with the present system. For example, an additional 40 octets (called session_key_seed) is generated. The additional session_key_seed is used in the Session key calculation in the conversation of the Authentication Phase **150** discussed below.

A specific PRF function in accordance with the embodiment of the present protocol may be used to generate a fresh master_secret from the specified client_random, server_random and PAC-Key. Of course, the PRF function used to generate keying material may be defined by TLS.

Since a PAC may be used as a credential for other applications beyond the present system and method, it will be appreciated that the PAC may be suitably configured to be further hashed using any desired random number generator (e.g. TLS-PRF) to generate a fresh TLS master_secret. As well, it will be appreciated that the session_key_seed is used by the Authentication Phase **150** conversation to both cryptographically bind the inner method(s) to the tunnel as well as generate the resulting session keys in accordance with the present protocol.

Continuing with the embodiment and after verifying the Finished message from the server **110,** the peer **120** may respond with two TLS records, a ChangeCipherSpec and the Finished message. Upon verifying the Finished message received by the peer **120,** the server **110** completes the Tunnel Establishment Phase **140** by establishing the tunnel and is ready for the conversation in accordance with the Authentication Phase **150.**

Following is a discussion of the Authentication Phase 150 in accordance with an embodiment of EAP-Fast.

### AUTHENTICATION PHASE 150

Continuing with the embodiment, a second portion of the protocol conversation may include a complete EAP conversation occurring within the TLS session negotiated in the Provisioning Phase **130** and ending with a protected termination. Of course, all EAP messages may be encapsulated in an EAP Message TLV.

In accordance with the present system, the Authentication Phase **150** will occur only if establishment of a TLS session in the Tunnel Establishment Phase **140** is successful or a TLS session is successfully resumed in the Tunnel Establishment Phase **140.**

As well, the Authentication Phase **150** will not occur if the peer **120** or server **110** fails authentication or if an EAP-Failure has been sent by the server **110** to the peer **120,** terminating the conversation. Of course, since all packets sent within the Authentication Phase **150** conversation occur after TLS session establishment in the Tunnel Establishment Phase **140,** the conversations may be protected using a negotiated TLS ciphersuite.

In operation, the Authentication Phase **150** conversation may consist of a protected EAP authentication using the user credentials (e.g. username and password). It will be appreciated that the entire EAP conversation including the user identity and EAP type may be protected from snooping and modification by the tunnel encapsulation in accordance with industry known techniques. It will further be appreciated that any method of authenticating known in the art may be used without departing from the spirit and scope of the present system and method. For example, the present innovation may utilize known mechanisms such as MS-CHAP and EAP-GTC or the like in accordance with the present system and method.

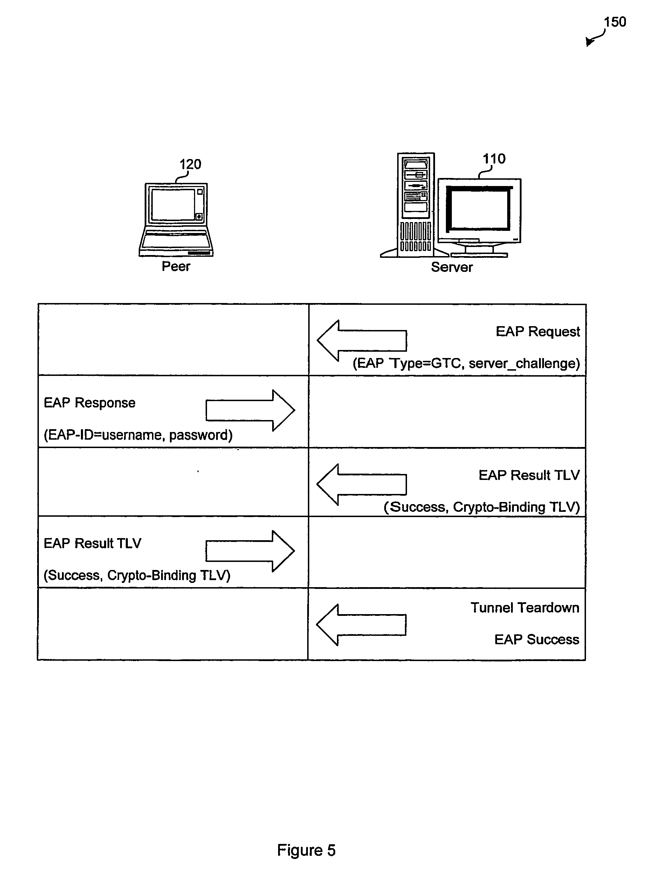

Now with reference to **Figure 5****,** the Authentication Phase **150** conversation begins with the server **110** sending an EAP-Request/Identity packet to the peer **120,** protected by the TLS ciphersuite negotiated in EAP-Fast Tunnel Establishment Phase **140.** In turn, the peer 120 is suitably configured to respond with an EAP-Response/Identity packet to the EAP server **110**, containing the userId of the peer **120.**

After the TLS session-protected Identity exchange, the server **110** may then select authentication method(s) for the peer **120,** and may send an EAP-Request with the EAP-Type set to the initial method.

It will be appreciated that the EAP conversation within the TLS protected session may involve zero or more EAP authentication methods, encapsulated by the EAP-TLV method. As well, it will be appreciated that the EAP conversation of the Authentication Phase **150** of **Figure 5** may complete protected termination.

In accordance with the protected termination, the Authentication Phase **150** conversation may be completed by exchanging both the success/failure indication (Result TLV) and the Crypto-Binding TLV within the TLS session. It will be appreciated that the Crypto-Binding TLV is present in the preceding or same packet containing a protected success indication (Result-TLV) in order to effectuate proper termination.

Of course, it will be appreciated that if the server **110** determines that a new PAC must be provisioned, the server **110** may optionally distribute a new PAC to the peer **120** at the same time with a successful protected Result TLV exchange.

### SUMMARY OF CONVERSATION PHASES

In summary and again with reference to **Figure 1****,** an embodiment of the present system and method commences upon the Provisioning Phase **130.** Throughout the Provisioning Phase **130,** the network server **110** and peer **120** may be configured to suitably establish a master or shared secret (e.g. PAC). It will be appreciated that in accordance with the present system and method, the Provisioning Phase **130** may not have to be repeated for subsequent authenticated conversations. In other words, the master secret (e.g. PAC) established in accordance with the Provisioning Phase **130** may be employed to secure multiple subsequent authenticated conversations between a server **110** and a peer **120.** Note that the Provisioning Phase **130** is a separate and distinct conversation that occurs infrequently and prior to the use of the subsequent Tunnel Establishment **140** and Authentication Phase **150.**

Once the shared secret is established in the Provisioning Phase **130,** the present system and method may proceed to invoke the Tunnel Establishment Phase **140.** In accordance with the Tunnel Establishment Phase **140,** a secure channel or tunnel is established and protected by the shared secret established in the Provisioning Phase **130.**

Next, the network server **110** and the peer **120** then proceed to the Authentication Phase **150.** In the Authentication Phase **150,** the network server **110** and peer **120** authenticate security credentials in order to finalize the secured exchange of information. As a result, the network server **110** and the peer **120** thereby ensure that they have been talking with each other and not an attacker (e.g. man-in-the-middle) by enforcing the cryptographic binding and protected Result TLV.

As previously discussed, an artisan will appreciate that the individual Provisioning Phase **130** discussed herein in accordance with present system and method (e.g. EAP-FAST) may be employed separately as well as in different chronological order as discussed in the embodiments herein. It will be appreciated that these embodiments will not deviate from the spirit and scope of the present system and method.

Further, by performing the Authentication Phase **150** over a secure channel protected by the shared secret, the network server **110** and the peer **120** may advantageously avoid the risk of a passive third-party attacker attacking the authentication exchange (e.g. **150).**

Finally, it will be appreciated that in the event that the Authentication Phase **150** fails, a compromise solution may be available to the parties **110, 120.** A number of compromise implementations may be available that would be dependent on the policies established by a particular network. For example, in one scenario, parties **110, 120** may assume not only that the shared secret has been compromised, but also that one or both of their authentication credentials may have been compromised. In such a case, where the second party is a wireless client and the first party is a network server, the network server may invalidate the credentials of the wireless client and require the wireless client to reestablish the credentials over an out-of-band channel.

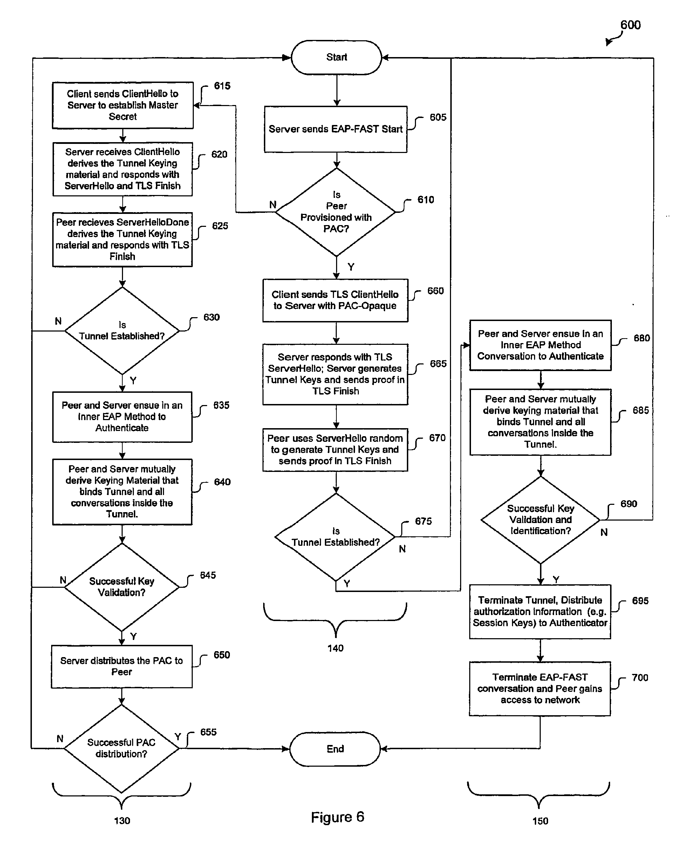

The process flow of the present and system and method may be better understood with reference to **Figure 6****.** Illustrated in **Figure 6** is an embodiment of a methodology **600** associated with the present system and method. Generally, Figure 6 illustrates the process used to provision, establish a tunnel and to protected authenticated communications in accordance with the present system and method.

The illustrated elements denote "processing blocks" and represent computer software instructions or groups of instructions that cause a computer or processor to perform an action(s) and/or to make decisions. Alternatively, the processing blocks may represent functions and/or actions performed by functionally equivalent circuits such as a digital signal processor circuit, an application specific integrated circuit (ASIC), or other logic device. The diagram, as well as the other illustrated diagrams, does not depict syntax of any particular programming language. Rather, the diagram illustrates functional information one skilled in the art could use to fabricate circuits, generate computer software, or use a combination of hardware and software to perform the illustrated processing.

It will be appreciated that electronic and software applications may involve dynamic and flexible processes such that the illustrated blocks can be performed in other sequences different than the one shown and/or blocks may be combined or separated into multiple components. They may also be implemented using various programming approaches such as machine language, procedural, object oriented and/or artificial intelligence techniques. The foregoing applies to all methodologies described herein.

Referring now to **Figure 6****,** there is illustrated a flow chart of an embodiment of the methodology **600** for protecting communication between network components. Although, the embodiment presumes wireless components of a network system (e.g. wireless client, AP, switch, AS), it will be appreciated that the present innovation may be applied to any network (e.g. wired or wireless) known in the art.

Initially, at block **605,** the system initiates the request from the server to commence an EAP-FAST conversation with the peer. Upon receipt of this request, the peer determines whether it has a PAC provisioned for this server (decision block **610**)**.**

If at decision block **610,** the system determines that provisioning has not yet occurred, the system commences the Provisioning Phase **130** by the peer responding to continuing the EAP-FAST conversation as the initiation of the Provisioning Phase **130;** this is achieved by the peer sending a message (e.g. ClientHello) to commence establishment of a PAC (block **615**).

At block **620,** the server receives the message and employs the random challenge provided by the peer in the ClientHello along with its generated random challenge as a means of ensuing in the Diffie-Hellman key agreement to derive the keying material used to protect the tunnel. Additionally at block **620**, the server responds with a message (e.g. ServerHello) to provide the peer with the server's random challenge as well as proof of the tunnel key derivation in the TLS Finish record.

Next, the peer employs the server's random challenge to complete a key agreement (e.g. Diffie-Hellman) to derive the keying material, validate the server's proof included in the TLS Finish and generate the peer's own proof included in the peer's TLS Finish response (block **625**).

Next, the system determines if a tunnel has been properly established (decision block **630).** If, at decision block **630,** the tunnel has not been properly constructed, the peer and server fail the EAP-FAST conversation and the system resets as illustrated in **Figure 6****.**

On the other hand, if the tunnel succeeds, the peer and server can then initiate another conversation that is protected by the TLS tunnel using the mutually derived keys (block **635**). It will be appreciated that the conversation of block **635** may be protected by the tunnel encryption and message integrity protections.

At block **640,** the peer and the server use the keying material derived at the tunnel as well as that derived by the inner authentication method to cryptographically bind the tunnel. Additionally, at block **640,** both parties validate their respective identity to each other. The validation is accomplished by inclusion of a message authentication code using the compound MAC value to ensure the tunnel's integrity through the use of a cryptographic binding TLV request and response between peer and server.

Next, at decision block **645,** the system determines if the key validation is successful. If at decision block **645,** the compound MAC fails, the EAP-FAST provisioning conversation fails and the process resets as illustrated in **Figure 6****.**

If the key validation is successful at decision block **645,** the server will provision, that is, distribute the PAC to the peer when the cryptographic binding succeeds (block **650**). At block 655, the server validates that the distribution has succeeded by enabling the peer to acknowledge receipt of the PAC. Once the distribution succeeds, the tunnel is torn down and the EAP-FAST provisioning conversation terminates. If the PAC is not successfully distributed, the system is reset as illustrated in **Figure 6****.**

Returning to block **605**, once EAP-FAST is commenced by the server's request. The client determines whether a PAC has been provisioned (decision block **610**). In the event that the peer is provisioned with a valid PAC, the client sends a random challenge in the ClientHello as well as the PAC-Opaque established in the provisioning phase (block **660**).

Upon receipt, at block **665**, the server uses the peer's random challenge, a server generated random challenge and the PAC-Key extracted from the PAC-Opaque to generate the tunnel keying material and responds with a TLS ServerHello and TLS Finish record that includes the proof that it has generated the appropriate keying material.

Next, at block **670**, the peer consumes the server's random challenge in the same manner to generate the tunnel keying material and generates its proof of such keying material by responding with a TLS Finish. At this stage, the tunnel key is established between the client and server and the tunnel establishment must be valid through the validation of the TLS Finish records (decision block **675**)**.**

If at decision block **675** the secure tunnel is not established (e.g. if either the server or the peer's TLS Finish record is invalid), the EAP-FAST conversation is terminated as a failed authentication and the peer and server may choose to try again. As illustrated, the system returns to the Start block to try again as illustrated in **Figure 6****.**

Following a successful establishment of the protected tunnel, the system continues to the authentication phase **150** conversation at block **680.** Within the protected tunnel, the peer and server ensue in at least zero to many conversations to achieve the required authentication and authorization as defined by the server (block **680**). It will be appreciated that the conversations in accordance with block **680** may be protected by the tunnel encryption and method integrity protections. At block **685,** both peer and server cryptographically bind all of the accrued keying material to prove tunnel integrity as well as deriving the master session keys.

Next, the system determines if the key validation and identification were successful (decision block **690**). At decision block **690**, both peer and server must exchange a Result TLV and the Cryptographic binding TLV in order to establish the tunnel integrity and signal a successful authentication result. Further, the server must verify that at least one disclosed identity in the protected tunnel matches the identity disclosed in the PAC-Opaque.

If the validation or verification fails at decision block **690**, the EAP-FAST conversation is terminated as a failed authentication and the peer and server may choose to try again as illustrated in **Figure 6****.**

On the other hand, following a successful validation and verification, the server may distribute the authorization policies to the authenticator (block **695**). Additionally, both peer and server terminate the tunnel as per block **695.** At block **700,** the EAP-FAST conversation is terminated and the peer has gained access to the network with the established authorization policies.

While not shown in **Figure 6****,** it will be appreciated that following a successful validation and verification, the server may also distribute updated credentials such as a new PAC and or username and password as part of the authorization policies.

It will be appreciated that the methodology **600** illustrated in **Figure 6** describes the provisioning and authentication of a wireless client for a single communication session. One skilled in the art will recognize that subsequent communication sessions may include appropriate portions of the methodology **600** in order to secure communication.

While the present system has been illustrated by the description of embodiments thereof, and while the embodiments have been described in considerable detail, it is not the intention of the applicants to restrict or in any way limit the scope of the appended claims to such detail. Additional advantages and modifications will readily appear to those skilled in the art. Therefore, the system, in its broader aspects, is not limited to the specific details, the representative apparatus, and illustrative examples shown and described. Accordingly, departures may be made from such details without departing from the scope of the applicant's general inventive concept.

Although the preferred embodiment has been described in detail, it should be understood that various changes, substitutions and alterations can be made therein without departing from the scope of the invention as defined by the appended claims.

## Claims

1. A method of authenticating communication in a network between a first (110) and a second (120) party, the method comprising:
determining whether a shared secret exists between the first party (110) and the second party (120);
responsive to determining the shared secret does not exist between the first and the second party:
establishing a first secure tunnel between the first and the second party using asymmetric cryptography to derive a first tunnel key;
provisioning the shared secret (130) between the first party (110) and the second party (120) using the first tunnel; and
closing the first tunnel;
said method further comprising :
establishing a second secure tunnel (140) between the first party and the second party based on the shared secret;
authenticating a relationship (150) between the first party and the second party within the second secure tunnel using a secure credential to establish an authorisation policy; and
distributing an update to one of the shared secret and the secure credential within the secure tunnel to update the authorisation policy;
cryptographically binding the second secure tunnel with conversations inside the second secure tunnel.

2. The method set forth in claim 1 further comprising the step of protecting the termination of the authenticated conversation by use of a tunnel encryption and authentication to protect against a denial of service by an unauthorized user (640).

3. The method set forth in claim 1 or 2 wherein the step of provisioning occurs within a wired implementation.

4. The method set forth in claim 1 or 2 wherein the step of provisioning occurs within a wireless implementation.

5. The method set forth in any preceding claim wherein the shared secret is a protected access credential, PAC.

6. The method set forth in claim 5 wherein the protected access credential includes a protected access credential key.

7. The method set forth in claim 6 wherein the protected access credential key is a strong entropy key.

8. The method set forth in claim 7 wherein the entropy key is a 32-octet key.

9. The method set forth in claim 6 wherein the protected access credential includes a protected access credential opaque element.

10. The method set forth in claim 6 wherein the protected access credential includes a protected access credential information element.

11. The method set forth in any preceding claim wherein the step of provisioning occurs through out-of-band mechanisms.

12. The method set forth in any of claims 1 to 10 wherein the step of provisioning occurs through in-band mechanisms.

13. The method set forth in any preceding claim wherein the step of mutually deriving a tunnel key further includes the step of establishing a session_key_seed and deriving a master session key.

14. The method set forth in any preceding claim wherein the step of authenticating is performed using EAP-GTC (680).

15. The method set forth in any of Claims 1 to 13 wherein the step of authenticating is performed using Microsoft MS-CHAP v2.

16. A system for communicating via a network, the system comprising:
means for determining whether a shared secret exists between a first party (110) and a second party (120)
means for establishing using asymmetric cryptography to derive a first tunnel key a communication link comprising a first secure tunnel between the first party (110) and the second party (120) responsive to determining the shared secret does not exist between the first party and the second party;
means for provisioning (130) the shared secret between the first and the second party using the first tunnel responsive to establishing the first tunnel;
means for closing the first tunnel responsive to provisioning of the shared secret;
means for establishing a second secure tunnel (140) between the first party and the second party based on the shared secret;
means for authenticating (150) a relationship between the first party and the second party within the second secure tunnel using a second secure credential to establish an authorisation policy; and
means for distributing an update to one of the first secure credential and the second secure credential within the second secure tunnel to update the authorisation policy; and
means for cryptographically binding the second secure tunnel conversations inside the second secure tunnel.

17. The system for communicating set forth in claim 16 wherein the communication link is a wireless network.

18. The system for communicating set forth in claim 16 wherein the communication link is a wired network.

19. The system for communicating set forth in any of claims 16 to 18 wherein the shared secret is a protected access credential, PAC.

20. The system for communicating set forth in claim 17 wherein the wireless network is an 802. 11 wireless network.

21. A computer program or computer program product comprising logic for performing a method according to any of claims 1 to 15.

22. A wireless device (110) comprising:
means for determining whether a shared secret exists between the wireless device and a second wireless device;
means for establishing a first secure tunnel between the wireless device and a second wireless device using asymmetric cryptography to derive a first tunnel key responsive to determining that the shared secret does not exist;
means for receiving the shared secret (130) via the first tunnel responsive to establishing the first tunnel, the shared secret being shared between the wireless device (110) and a second wireless device (120);
means for closing the first tunnel once the shared secret has been received;
means for establishing a second secure tunnel (140) between the wireless device (110) and the second wireless device (120) based on the shared secret; and
means for mutually authenticating (150) with the second wireless device employing the second secure tunnel and means for using a second secure credential for establishing an authorisation policy; and
means for receiving an update to one of the first secure credential and the second secure credential within the second secure tunnel to update the authorisation policy; and
means for cryptographically binding the second secure tunnel with conversations inside the second secure tunnel.

23. A wireless device according to Claim 22, further comprising means for establishing a second secure tunnel for receiving the shared secret.

24. A wireless device according to Claim 22 or 23 further comprising means for establishing a session key seed for deriving a master session key for mutually authenticating the second wireless device.

## Patentansprüche

1. Verfahren zum Authentisieren von Kommunikation in einem Netzwerk zwischen einer ersten (110) und einer zweiten (120) Partei, wobei das Verfahren umfasst:
Ermitteln, ob zwischen der ersten Partei (110) und der zweiten Partei (120) ein gemeinsames Geheimnis besteht;
im Ansprechen auf das Ermitteln, dass zwischen der ersten und der zweiten Partei kein gemeinsames Geheimnis besteht:
Herstellen eines ersten sicheren Tunnels zwischen der ersten und der zweiten Partei mittels asymmetrischer Kryptographie, um einen ersten Tunnelschlüssel abzuleiten;
Bereitstellen des gemeinsamen Geheimnisses (130) zwischen der ersten Partei (110) und der zweiten Partei (120) mittels des ersten Tunnels; und
Schließen des ersten Tunnels;
wobei das Verfahren des Weiteren umfasst:
Herstellen eines zweiten sicheren Tunnels (140) zwischen der ersten Partei und der zweiten Partei basierend auf dem gemeinsamen Geheimnis;
Authentisieren eines Verhältnisses (150) zwischen der ersten Partei und der zweiten Partei in dem zweiten sicheren Tunnel mittels eines sicheren Berechtigungsnachweises, um eine Autorisierungsrichtlinie zu erstellen; und
Verteilen einer Aktualisierung an eines des gemeinsamen Geheimnisses und des sicheren Berechtigungsnachweises in dem sicheren Tunnel, um die Autorisierungsrichtlinie zu aktualisieren;
kryptographisches Binden des zweiten sicheren Tunnels mit Konversationen in dem zweiten sicheren Tunnel.

2. Verfahren nach Anspruch 1, das des Weiteren den Schritt des Schützens der Beendigung der authentisierten Konversation mittels einer Tunnelverschlüsselung und Authentisierung zum Schutz vor einer Dienstblockade (denial of service) durch einen unbefugten Benutzer (640) umfasst.

3. Verfahren nach Anspruch 1 oder 2, wobei der Schritt des Bereitstellens in einer verdrahteten Implementierung stattfindet.

4. Verfahren nach Anspruch 1 oder 2, wobei der Schritt des Bereitstellens in einer drahtlosen Implementierung stattfindet.

5. Verfahren nach einem der vorhergehenden Ansprüche, wobei das gemeinsame Geheimnis ein Berechtigungsnachweis für den geschützten Zugang (Protected Access Credential; PAC) ist.

6. Verfahren nach Anspruch 5, wobei der Berechtigungsnachweis für den geschützten Zugang einen Berechtigungsnachweis-Schlüssel für den geschützten Zugang enthält.

7. Verfahren nach Anspruch 6, wobei der Berechtigungsnachweis-Schlüssel für den geschützten Zugang ein Schlüssel mit hoher Entropie ist.

8. Verfahren nach Anspruch 7, wobei der Entropie-Schlüssel ein 32-Oktett Schlüssel ist.

9. Verfahren nach Anspruch 6, wobei der Berechtigungsnachweis für den geschützten Zugang ein unklares Element des Berechtigungsnachweises für den geschützten Zugang enthält.

10. Verfahren nach Anspruch 6, wobei der Berechtigungsnachweis für den geschützten Zugang ein Informationselement des Berechtigungsnachweises für den geschützten Zugang enthält.

11. Verfahren nach einem der vorhergehenden Ansprüche, wobei der Schritt des Bereitstellens durch Band-externe Mechanismen stattfindet.

12. Verfahren nach einem der Ansprüche 1 bis 10, wobei der Schritt des Bereitstellens durch Band-interne Mechanismen stattfindet.

13. Verfahren nach einem der vorhergehenden Ansprüche, wobei der Schritt des gegenseitigen Ableitens eines Tunnelschlüssels des Weiteren den Schritt des Herstellens einer session_key_seed (Sitzungs_Schlüssel_Seed) und das Ableiten eines Haupt-Sitzungsschlüssels umfasst.

14. Verfahren nach einem der vorhergehenden Ansprüche, wobei der Schritt des Authentisierens mittels EAP-GTC (680) durchgeführt wird.

15. Verfahren nach einem der Ansprüche 1 bis 13, wobei der Schritt des Authentisierens mittels Microsoft MS-CHAP v2 durchgeführt wird.

16. System zum Kommunizieren über ein Netzwerk, wobei das System aufweist:
eine Einrichtung zum Ermitteln, ob zwischen einer ersten Partei (110) und einer zweiten Partei (120) ein gemeinsames Geheimnis besteht;
eine Einrichtung zum Herstellen, mittels asymmetrischer Kryptographie, um einen ersten Tunnelschlüssel abzuleiten, einer Kommunikationsverbindung mit einem ersten sicheren Tunnel zwischen der ersten Partei (110) und der zweiten Partei (120) im Ansprechen auf das Ermitteln, dass zwischen der ersten Partei und der zweiten Partei kein gemeinsames Geheimnis besteht;
eine Einrichtung zum Bereitstellen (130) des gemeinsamen Geheimnisses zwischen der ersten und der zweiten Partei mittels des ersten Tunnels im Ansprechen auf das Herstellen des ersten Tunnels; und
eine Einrichtung zum Schließen des ersten Tunnels im Ansprechen auf das Bereitstellen des gemeinsamen Geheimnisses;
eine Einrichtung zum Herstellen eines zweiten sicheren Tunnels (140) zwischen der ersten Partei und der zweiten Partei basierend auf dem gemeinsamen Geheimnis;
eine Einrichtung zum Authentisieren (150) eines Verhältnisses zwischen der ersten Partei und der zweiten Partei in dem zweiten sicheren Tunnel mittels eines zweiten sicheren Berechtigungsnachweises, um eine Autorisierungsrichtlinie zu erstellen; und
eine Einrichtung zum Verteilen einer Aktualisierung an eines des ersten sicheren Berechtigungsnachweises und des zweiten sicheren Berechtigungsnachweises in dem zweiten sicheren Tunnel, um die Autorisierungsrichtlinie zu aktualisieren; und
eine Einrichtung zum kryptographischen Binden der Konversationen des zweiten sicheren Tunnels in dem zweiten sicheren Tunnel.

17. System zum Kommunizieren nach Anspruch 16, wobei die Kommunikationsverbindung ein drahtloses Netzwerk ist.

18. System zum Kommunizieren nach Anspruch 16, wobei die Kommunikationsverbindung ein verdrahtetes Netzwerk ist.

19. System zum Kommunizieren nach einem der Ansprüche 16 bis 18, wobei das gemeinsame Geheimnis ein Berechtigungsnachweis für den geschützten Zugang (Protected Access Credential; PAC) ist.

20. System zum Kommunizieren nach Anspruch 17, wobei das drahtlose Netzwerk ein 802.11 drahtloses Netzwerk ist.

21. Computerprogramm oder Computerprogramm-Erzeugnis mit Logik zum Durchführen eines Verfahrens nach einem der Ansprüche 1 bis 15.

22. Drahtloses Gerät (110), das aufweist:
eine Einrichtung zum Ermitteln, ob zwischen dem drahtlosen Gerät und einem zweiten drahtlosen Gerät ein gemeinsames Geheimnis besteht;
eine Einrichtung zum Herstellen eines ersten sicheren Tunnels zwischen dem drahtlosen Gerät und einem zweiten drahtlosen Gerät mittels asymmetrischer Kryptographie, um im Ansprechen darauf, dass das gemeinsame Geheimnis nicht besteht, einen ersten Tunnelschlüssel abzuleiten;
eine Einrichtung zum Empfangen des gemeinsamen Geheimnisses (130) über den ersten Tunnel im Ansprechen auf das Herstellen des ersten Tunnels, wobei das gemeinsame Geheimnis zwischen dem drahtlosen Gerät (110) und einem zweiten drahtlosen Gerät (120) geteilt wird;
eine Einrichtung zum Schließen des ersten Tunnels, sobald das gemeinsame Geheimnis empfangen wurde;
eine Einrichtung zum Herstellen eines zweiten sicheren Tunnels (140) zwischen dem drahtlosen Gerät (110) und dem zweiten drahtlosen Gerät (120) basierend auf dem gemeinsamen Geheimnis; und
eine Einrichtung zum gegenseitigen Authentisieren (150) des zweiten drahtlosen Geräts unter Verwendung des zweiten sicheren Tunnels, und eine Einrichtung zum Verwenden eines zweiten sicheren Berechtigungsnachweises, um eine Autorisierungsrichtlinie zu erstellen; und
eine Einrichtung zum Empfangen einer Aktualisierung eines des ersten sicheren Berechtigungsnachweises und des zweiten sicheren Berechtigungsnachweises in dem zweiten sicheren Tunnel, um die Autorisierungsrichtlinie zu aktualisieren; und
eine Einrichtung zum kryptographischen Binden des zweiten sicheren Tunnels mit Konversationen in dem zweiten sicheren Tunnel.

23. Drahtloses Gerät nach Anspruch 22, das des Weiteren eine Einrichtung zum Herstellen eines zweiten sicheren Tunnels zum Empfangen des gemeinsamen Geheimnisses aufweist.

24. Drahtloses Gerät nach Anspruch 22 oder 23, das des Weiteren eine Einrichtung zum Herstellen einer Sitzungsschlüssel Seed (session key seed) zum Ableiten eines Haupt-Sitzungsschlüssels zum gegenseitigen Authentisieren des zweiten drahtlosen Geräts umfasst.

## Revendications

1. Procédé d'authentification de communication dans un réseau entre une première (110) et une seconde (120) parties, le procédé comprenant les étapes consistant à :
déterminer si un secret partagé existe entre la première partie (110) et la seconde partie (120) ;
en réponse à la détermination selon laquelle le secret partagé n'existe pas entre la première et la seconde partie :
établir un premier tunnel sécurisé entre la première et la seconde partie en utilisant une cryptographie asymétrique pour dériver une première clé de tunnel ;
approvisionner le secret partagé (130) entre la première partie (110) et la seconde partie (120) en utilisant le premier tunnel ; et
fermer le premier tunnel ;
ledit procédé comprenant en outre les étapes consistant à :
établir un second tunnel sécurisé (140) entre la première partie et la seconde partie en se basant sur le secret partagé ;
authentifier une relation (150) entre la première partie et la seconde partie dans le second tunnel sécurisé en utilisant un justificatif d'identité sécurisé pour établir une politique d'autorisation ; et
distribuer une mise à jour à un élément parmi le secret partagé et le justificatif d'identité sécurisé dans le tunnel sécurisé pour mettre à jour la politique d'autorisation ;
lier cryptographiquement le second tunnel sécurisé avec des conversations à l'intérieur du second tunnel sécurisé.

2. Procédé selon la revendication 1, comprenant en outre l'étape consistant à protéger la cessation de la conversation authentifiée à l'aide d'un chiffrement de tunnel et d'une authentification pour protection contre un déni de service par un utilisateur non autorisé (640).

3. Procédé selon la revendication 1 ou 2, dans lequel l'étape d'approvisionnement se produit dans une implémentation filaire.

4. Procédé selon la revendication 1 ou 2, dans lequel l'étape d'approvisionnement se produit dans une implémentation sans fil.

5. Procédé selon l'une quelconque des revendications précédentes, dans lequel le secret partagé est un justificatif d'identité d'accès protégé PAC.

6. Procédé selon la revendication 5, dans lequel le justificatif d'identité d'accès protégé inclut une clé de justificatif d'identité d'accès protégé.

7. Procédé selon la revendication 6, dans lequel la clé de justificatif d'identité d'accès protégé est une clé d'entropie forte.

8. Procédé selon la revendication 7, dans lequel la clé d'entropie est une clé de 32 octets.

9. Procédé selon la revendication 6, dans lequel le justificatif d'identité d'accès protégé inclut un élément opaque de justificatif d'identité d'accès protégé.

10. Procédé selon la revendication 6, dans lequel le justificatif d'identité d'accès protégé inclut un élément d'informations de justificatif d'identité d'accès protégé.

11. Procédé selon l'une quelconque des revendications précédentes, dans lequel l'étape d'approvisionnement se produit par l'intermédiaire de mécanismes hors bande.

12. Procédé selon l'une quelconque des revendications 1 à 10, dans lequel l'étape d'approvisionnement se produit par l'intermédiaire de mécanismes intrabande.

13. Procédé selon l'une quelconque des revendications précédentes, dans lequel l'étape de dérivation mutuelle d'une clé de tunnel inclut en outre l'étape d'établissement d'un germe de clé de session et de dérivation d'une clé de session maître.

14. Procédé selon l'une quelconque des revendications précédentes, dans lequel l'étape d'authentification est effectuée à l'aide d'un EAP-GTC (680).

15. Procédé selon l'une quelconque des revendications 1 à 13, dans lequel l'étape d'authentification est effectuée à l'aide de MS-CHAP v2 de Microsoft.

16. Système de communication via un réseau, le système comprenant :
un moyen permettant de déterminer si un secret partagé existe entre une première partie (110) et une seconde partie (120) ;
un moyen permettant d'établir à l'aide d'une cryptographie asymétrique pour dériver une première clé de tunnel, un lien de communication comprenant un premier tunnel sécurisé entre la première partie (110) et la seconde partie (120) en réponse à la détermination selon laquelle le secret partagé n'existe pas entre la première partie et la seconde partie ;
un moyen permettant d'approvisionner (130) le secret partagé entre la première partie et la seconde partie en utilisant le premier tunnel en réaction à l'établissement du premier tunnel ;
un moyen permettant de fermer le premier tunnel en réponse à l'approvisionnement du secret partagé ;
un moyen permettant d'établir un second tunnel sécurisé (140) entre la première partie et la seconde partie en se basant sur le secret partagé ;
un moyen permettant d'authentifier (150) une relation entre la première partie et la seconde partie dans le second tunnel sécurisé en utilisant un second justificatif d'identité sécurisé pour établir une politique d'autorisation ; et
un moyen permettant de distribuer une mise à jour à l'un parmi le premier justificatif d'identité sécurisé et le second justificatif d'identité sécurisé dans le second tunnel sécurisé pour mettre à jour la politique d'autorisation ; et
un moyen permettant de lier cryptographiquement les conversations du second tunnel sécurisé à l'intérieur du second tunnel sécurisé.

17. Système de communication selon la revendication 16, dans lequel le lien de communication est un réseau sans fil.

18. Système de communication selon la revendication 16, dans lequel le lien de communication est un réseau filaire.

19. Système de communication selon l'une quelconque des revendications 16 à 18, dans lequel le secret partagé est un justificatif d'identité d'accès protégé PAC.

20. Système de communication selon la revendication 17, dans lequel le réseau sans fil est un réseau sans fil 802.11.

21. Programme informatique ou produit de programme informatique comprenant une logique permettant d'effectuer un procédé selon l'une quelconque des revendications 1 à 15.

22. Dispositif sans fil (110) comprenant :
un moyen permettant de déterminer si un secret partagé existe entre le dispositif sans fil et un second dispositif sans fil ;
un moyen permettant d'établir un premier tunnel sécurisé entre le dispositif sans fil et un second dispositif sans fil en utilisant une cryptographie asymétrique pour dériver une première clé de tunnel en réaction à la détermination selon laquelle le secret partagé n'existe pas ;
un moyen permettant de recevoir le secret partagé (130) via le premier tunnel en réaction à l'établissement du premier tunnel, le secret partagé étant partagé entre le dispositif sans fil (110) et un second dispositif sans fil (120) ;
un moyen permettant de fermer le premier tunnel une fois que le secret partagé a été reçu ;
un moyen permettant d'établir un second tunnel sécurisé (140) entre le dispositif sans fil (110) et le second dispositif sans fil (120) en se basant sur le secret partagé ; et
un moyen d'authentification mutuelle (150) avec ledit second dispositif sans fil employant le second tunnel sécurisé et un moyen permettant d'utiliser un second justificatif d'identité sécurisé pour établir une politique d'autorisation ; et
un moyen permettant de recevoir une mise à jour de l'un quelconque parmi le premier justificatif d'identité sécurisé et le second justificatif d'identité sécurisé avec le second tunnel sécurisé pour mettre à jour la politique d'autorisation ; et
un moyen permettant de lier cryptographiquement le second tunnel sécurisé avec des conversations à l'intérieur du second tunnel sécurisé.

23. Dispositif sans fil selon la revendication 22, comprenant en outre un moyen permettant d'établir un second tunnel sécurisé pour recevoir le secret partagé.

24. Dispositif sans fil selon la revendication 22 ou 23, comprenant en outre un moyen permettant d'établir un germe de clé de session pour dériver une clé de session maître permettant d'authentifier mutuellement le second dispositif sans fil.
